# EUROPÄISCHE PATENTSCHRIFT

(11) **EP 1 510 424 B1**
(45) Veröffentlichungstag und Bekanntmachung des Hinweises auf die Patenterteilung: **29.12.2010**
(21) Anmeldenummer: 04020118.8
(22) Anmeldetag: 25.08.2004
(51) Int. Cl.: B60S 9/18, B60D 1/66

(54) **Stützvorrichtung einer Anhängerdeichsel eines PKW-Anhängers**
Support apparatus of a trailer tow bar
Dispositif de support pour timon de remorque

(30) Priorität: 27.08.2003 DE 20313356 U
(43) Veröffentlichungstag der Anmeldung: 02.03.2005
(73) Patentinhaber: AL-KO Kober AG, D-89359 Kötz (DE)
(72) Erfinder: Beck, Gerhard, 89343 Jettingen-Scheppach (DE); Eckle, Volker, 89183 Holzkirch (DE)
(74) Vertreter: Binder, Armin

(56) Entgegenhaltungen:
- CH-A- 642 916
- DE-A- 1 780 197
- DE-A- 2 833 930
- DE-A- 2 916 125
- DE-U- 8 316 059
- FR-A- 2 318 764

## Beschreibung

Die Erfindung betrifft eine Stützvorrichtung einer Anhängerdeichsel eines PKW-Anhängers bestehend aus einem Außenrohr, das ein erstes Stützlager aufweist, einem, im Außenrohr beweglichen, Innenrohr, das ein zweites Stützlager und ein drittes Stützlager aufweist, einer Spindelstange, die das erste Stützlager mit einem zweiten Stützlager, bezüglich des Abstandes zwischen den Stützlagern verstellbar, verbindet, einem Federelement, welches sich einerseits am dritten Stützlager und andererseits am vierten Stützlager abstützt und einem Stützrad, welches mit dem vierten Stützlager verbunden und durch das Federelement federnd gelagert ist.

Aus der Offenlegungsschrift 28 33 930 ist eine ähnliche Stützvorrichtung für Anhänger bekannt, die es ermöglicht die Auflagelast zu bestimmen. Sie besteht aus einer Stützvorrichtung mit einer, durch eine Spindelstange gegenüber einer mit dem Anhänger verbundenen, höhenverstellbaren Radgabel, **dadurch gekennzeichnet, dass** das Federelement über eine Spindelstange am Außenrohr abgestützt und eine dem Federelement zugeordnete Ablesevorrichtung beziehungsweise Markierung gegenüber einer Bezugslinie am Außenrohr so angeordnet ist, dass bei zulässiger Belastung des Stützrades Markierung und Bezugslinie gleich hoch sind. Dabei wird der Federweg des starr mit der Radgabel verbundenen Stützrades nach oben und nach unten durch Anschläge begrenzt, das Außenrohr greift konzentrisch über das Federelement, welches von einem Innenrohr, dessen Durchmesser nur wenig kleiner ist als der des Außenrohres, umgeben ist, und ist nach unten offen. Das Problem dieser Stützvorrichtung besteht darin, dass die Auflagekräfte auf das Rad mit einem Hebelarm auf das Innen- und Außenrohr wirken, wodurch ein Drehmoment entsteht und dadurch das Innenrohr gegen das Außenrohr verkantet. Hierdurch entsteht ein ungünstiges Federungsverhalten und dadurch auch eine unsichere und ungenaue Stützlastanzeige.

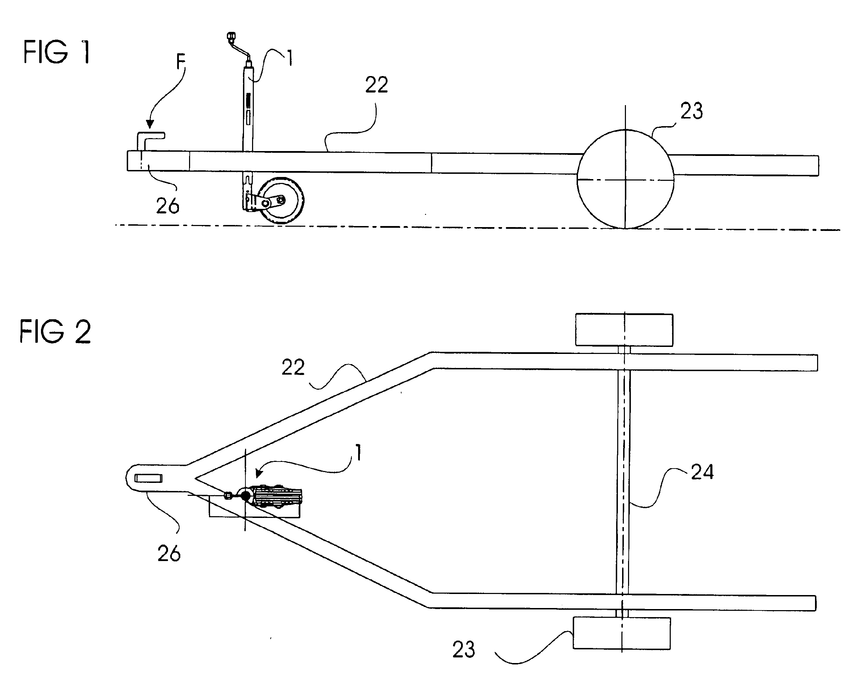

Des weiteren wird in der französischen Patentanmeldung FR 2 318 764 eine Stützvorrichtung zum Ermitteln der Stützlast bei Wohnwagen beschrieben. Die dort verwendeten Bezugszeichen sind in Klammern angegeben. Diese Stützvorrichtung besteht gemäß der dort gezeigten Figuren 2 bis 4 aus einem Außenrohr (6), welches mit einem ersten Stützlager (12, 15, 16) verbunden ist, und einem Innenrohr (8), welches über eine Spindel (10) mit einem zweiten Stützlager (9) verbunden ist, wobei das Außenrohr (6) konzentrisch und längsbeweglich über das Innenrohr (8) greift. Das Stützrad (18) ist über einen Schwenkarm (17), der das Stützrad um die Längsachse der Stützvorrichtung schwenken kann, mit einem Tragrohr (22) verbunden. Außerdem ist dieses Tragrohr (22) durch eine Spiralfeder (20) gegenüber dem Innenrohr (8) abgefedert. Entsprechend der auf der Stützvorrichtung und damit auch auf der Deichsel anliegenden Stützlast wird die Spiralfeder (20) weitgehend proportional gestaucht und taucht das Tragrohr (22) in das Innenrohr (8) ein. Über eine, am Tragrohr (22) angebrachte Skala kann die anliegende Stützlast abgelesen werden. Auch hier ergibt sich aus der starren exzentrischen Verbindung von Stützrad und Tragrohr, das im Innenrohr längsbeweglich angeordnet ist, bei Belastung eine Verkantung von Innenrohr und Tragrohr. Diese Verkantung erzeugt einerseits ein ungünstiges Einfederverhalten und auch eine verfälschte Anzeige der Belastung.

Eine gattungsgemäße Stützvorrichtung ist aus der DE-A-8316059U bekannt.

Es ist Aufgabe der Erfindung eine gegenüber dem Stand der Technik verbesserte Stützvorrichtung zur Verfügung zu stellen.

Diese Aufgabe wird durch die Merkmale der unabhängigen Schutzansprüche gelöst. Vorteilhafte Weiterbildungen der Erfindung sind Gegenstand untergeordneter Ansprüche.

Der Erfinder hat erkannt, dass es möglich ist, die ungenaue Anzeige einer gattungsgemäßen Stützvorrichtung zu verbessern, indem durch entsprechende konstruktive Ausgestaltung ein Verkanten des federbeweglichen Teils der Stützvorrichtung verhindert wird.

Demgemäß schlägt der Erfinder vor, die bekannte Stützvorrichtung einer Anhängerdeichsel eines PKW-Anhängers, mindestens bestehend aus:
- einem Außenrohr, das ein erstes Stützlager aufweist,
- einem, im Außenrohr beweglichen, Innenrohr, das ein zweites Stützlager und ein drittes Stützlager aufweist,
- einer Höhenverstelleinrichtung, die das erste Stützlager mit einem zweiten Stützlager, bezüglich des Abstandes zwischen den Stützlagern verstellbar, verbindet,
- einem Federelement, welches sich einerseits am dritten Stützlager und andererseits an einem vierten Stützlager abstützt, und
- einem Stützrad, welches mit dem vierten Stützlager verbunden und durch das Federelement federnd gelagert ist,
dahingehend zu verbessern, dass das Stützrad über einen, starr am Innenrohr befestigten Schwenkarm, am Schwingarm exzentrisch und federnd zum Innenrohr gelagert ist, wobei das Federelement mit dem vierten Stützlager (5) innerhalb des Innenrohres angeordnet ist.

Die besonders vorteilhafte federnde exzentrische Lagerung über den Schwingarm ergibt ein sehr weiches Federverhalten der Stützvorrichtung, die zu einem sehr hohen Abrollkomfort führt und einen hiermit ausgestatteten Anhänger besonders leicht auch über unebenes Gelände bewegen lässt.

Vorteilhaft kann das Innenrohr ausschließlich und vorzugsweise durch eine Spindelstange, gegenüber dem Außenrohr beweglich ausgeführt sein.

Weiterhin kann zur Bedienung der Spindel eine Handkurbel verwendet werden. Grundsätzlich besteht aber auch die Möglichkeit, die Spindel durch einen anderen motorischen Antrieb zu bewegen, um eine Höhenverstellung zu bewirken. Zum Beispiel kann dies ein hydraulischer oder elektrischer Antrieb sein. Allerdings ist es auch möglich die Spindel selbst durch einen Hydraulikzylinder zu ersetzen, der durch eine Hydraulikpumpe elektrisch oder von Hand betrieben wird.

Das erste Stützlager kann vorteilhaft oben mit dem Außenrohr und das zweite Stützlager oben mit dem Innenrohr verbunden werden, während das dritte Stützlager unten mit dem Innenrohr verbunden ist und als Auflage für das Federelement dient. Zur Befestigung zwischen Stützlager und dem jeweiligen zugeordneten Rohr können diese vorzugsweise verklemmt und/oder verschweißt und/oder verschraubt werden.

Des weiteren kann es vorteilhaft sein, wenn der Schwenkarm, an dem der Schwingarm für das Stützrad um eine Achse im Schwenkarm gelagert ist, als Gabel ausgebildet ist. Wobei durch die gelenkige Lagerung des Stützrades eine Federung erreicht wird, bei der seitliche Kräfte, die zum Verkanten führen können, ausschließlich vom Innenrohr aufgenommen werden und der Federmechanismus von Verkantungen, die dessen Bewegung behindern, frei bleibt.

Die auf den Schwingarm wirkenden Stützkräfte können über einen axial bewegbar angebrachten Stößel, der mit dem vierten Stützlager verbunden ist, auf das Federelement übertragen werden. Der Schwingarm kann am Stößellager mit einem Langloch versehen sein, da dieser Lagerpunkt beim Einfedern eigentlich eine Kreisbahn erzeugt und erst über dieses Langloch eine Bewegung in Querrichtung ermöglicht wird.

Ist die Lagerung des Schwenkarmes zwischen Radlager und Angriffspunkt des Stößels angeordnet, so bewirkt eine Stützlast ein Absenken des Stößels. Liegt der Angriffspunkt des Stößels zwischen Radlager und Schwenkarmlager, so kehrt sich seine Kinematik um. Entsprechend müssen die Stützlager in ihrer Reihenfolge und das Federelement als Druck- oder Zugfeder ausgeführt werden.

Hierbei kann die Lagerung des Stößels aus einem Langloch im Schwingarm und einem, durch dieses Langloch gesteckten Bolzen, bestehen, so dass der Stößel axial am Schwingarm gelagert ist.

Vorteilhaft kann der Stößel auch durch die Spiralfeder und das dritte Stützlager hindurchgeführt werden, da die Stützvorrichtung mit dieser Anordnung ohne großen Platzaufwand am Anhänger anzubringen ist.

Die Stützvorrichtung kann weiterhin vorteilhafterweise eine Anzeigevorrichtung aufweisen, die mit dem vierten Stützlager durch einen Messstab verbundenen ist, welcher nach oben durch geführt wird und ein komfortables Ablesen der Stützlast ermöglicht.

Für das problemlose Ablesen der Anzeigevorrichtung kann es vorteilhaft sein, wenn das Außenrohr einen Ausschnitt zum Ablesen der Anzeigevorrichtung aufweist, welcher als Schmutzschutz für die Rohrinnenseite über ein durchsichtiges Fenster verfügen kann. Zusätzlich kann eine Abdeckvorrichtung für den Ausschnitt, vorzugsweise eine Kunststoffmanschette, vorgesehen werden. Dadurch kann eine Verschmutzung des Sichtfensters und auch ein Eindringen von Schmutz in das Außenrohr verhindert werden.

Gemäß einer weiteren vorteilhaften Ausführung kann die Anzeigevorrichtung kalibrierbar ausgeführt werden. Hierdurch kann bei einer Erstbenutzung der Lastanzeige die Stützlast am Kugelkopf mit einer Waage gemessen und die Anzeigevorrichtung justiert werden. Die Justierung erfolgt entsprechend der Deichsellänge beziehungsweise entsprechend der Position des Stützrades, der Achse und der Anhängerkupplung, die von Anhänger zu Anhänger in unterschiedlichen Verhältnissen angeordnet sein können. Eine Kalibrierung der Anzeigevorrichtung und die daraus resultierende genaue Kenntnis der Stützlast ermöglicht das Überprüfen der Verkehrssicherheit des Gespanns, da die zulässige Stützlast vom verwendeten Zugfahrzeug abhängig ist.

Solch eine Justierung kann beispielsweise dadurch ausgeführt werden, dass der Messstab in seiner Länge verändert wird oder eine höhenverstellbare Markierung auf dem Messstab angebracht wird.

Vorteilhafterweise kann an der Anzeigevorrichtung eine Messskala angebracht werden, welche ein genaues und einfaches Ablesen der Stützlast ermöglicht. Diese Messskala kann ebenfalls höhenverschiebbar ausgeführt werden, so dass eine Kalibrierung durch eine Verschiebung möglich ist. Ebenfalls kann es vorteilhaft sein, die Anzeigevorrichtung im oberen Drittel des Stützvorrichtung anzubringen, um eine einfache Ablesbarkeit zu gewährleisten.

Des weiteren kann als alternative Anzeigevorrichtung eine Art Uhrenanzeige angebracht werden. Diese kann einerseits durch ein mit dem Messstab verbundenes Zahnrad, in dessen Mitte ein Zeiger angebracht wird, betrieben werden. Andererseits kann man auch das äußere Ende eines auf einer beweglich gelagerten Spule aufgewickelten Drahtes, oder Ähnliches, mit dem Messstab oder direkt mit dem dritten Stützlager verbinden. Durch die Auf- und Abbewegung des Messstabes wird über den Draht eine Rotationsbewegung der Spule erzeugt, die wiederum einen an einem Ende in der Mitte angebrachten Zeiger bewegt. Bei beiden Alternativen kann der Zeiger auch nicht unmittelbar am Zahnrad beziehungsweise an der Spule angebracht werden, sondern über eine Verbindungsstange, die durch ein Loch im Außenrohr nach außen führt, angebracht werden. Zwischen Zeiger und Außenrohr kann eine runde uhrenartige Messskala befestigt werden, durch deren Zentrum die Verbindungsstange geht und die vorteilhaft von einem durchsichtigen Deckel vor Umwelteinflüssen geschützt wird. Ein möglicher Vorteil dieser Ausführungen ist das Wegfallen der ansonsten vorteilhaften Abdeckvorrichtung und der Markierung auf dem Messstab.
In einer anderen besonders einfachen und robusten Ausgestaltung der erfindungsgemäßen Stützvorrichtung kann die Anzeigevorrichtung auch im Bereich des Schwingarms angebracht werden.

Einerseits kann dabei die Anzeigevorrichtung eine Messskala aufweisen, die am Schwingarm angebracht ist, und einen feststehenden Zeiger, die mit dem Schwenkarm fest verbunden ist, aufweisen. Der Zeiger kann dabei beispielsweise als Messzunge ausgestaltet sein, die als eine Verlängerung des Schwenkarms oder als separat angebrachter Zeiger ausgebildet sein kann. Wird der Zeiger schwenkbar ausgeführt, so ist hierdurch eine einfache Kalibrierung möglich. Alternativ kann allerdings auch bei feststehendem Zeiger die Messskala verschiebbar ausgeführt sein.

Wird die Messskala am Schwingarm angebracht, so kann in einer einfachen Ausführung die Messskala mit Skalierungsstrichen ausgestattet werden, die radial zum Drehpunkt der Messskala, also zum Schwenkarmlager des Schwingarms angeordnet sind. Hierbei ist durch ein verschwenken des Zeigers eine Kalibrierung des Nullpunktes, jedoch nicht eine Kalibrierung der Spreizung der Skala, möglich. Wird jedoch gleichzeitig der Zeiger in seinem Abstand zum Schwenkarmlager und die Messskala mit parallelen Skalierungsstrichen oder radialen Skalierungsstrichen, deren Mittelpunkt ungleich dem Mittelpunkt des Schwenkarmlagers ist, ausgeführt, so lässt sich auch eine Kalibrierung der Spreizung der Skala durchführen. Im Rahmen der Erfindung liegen auch andere Kurvenformen der Skalierungsstriche, die durch Längsverschiebung des Zeigers eine Kalibrierung der Spreizung der Messskala ermöglichen.

Entsprechend der oben beschriebenen Anbringung der Anzeigevorrichtung im Bereich des Schwingarmes liegt es auch im Rahmen der Erfindung, wenn der Anbringungsort von Messkala und Zeiger auch vertauscht werden, ebenso wie eine Anbringung des Zeigers unterhalb oder oberhalb der Achse des Stützrades. Auch kann es vorteilhaft sein die Anzeige durch die Anbringung eines Schau- und/oder Vergrößerungsglases bezüglich der Lesbarkeit zu verbessern. Hierzu kann auch ein Schrägstellen der Anzeige mit vorzugsweise entsprechend gebogenem Zeiger günstig sein. Alternativ besteht die Möglichkeit durch einen Spiegel die Sicht von oben auf die Anzeige zu erleichtern, wobei allerdings die Zahlenskala in Spiegelschrift ausgeführt sein sollte.

In einer besonderen Ausführung kann dann im eingedrehten Zustand, also in Transportstellung, der Schwingarm sich am Außenrohr abstützen und wird leicht aus seiner Ausgangsposition gebracht. Dadurch wird die Feder etwas zusammengedrückt und die Spindelstange auch in Transportstellung immer auf Zug beansprucht, wodurch wiederum eine Losdrehsicherung erzeugt wird.

Im folgenden wird die Erfindung anhand eines bevorzugten Ausführungsbeispieles mit Hilfe der Figuren näher beschrieben. Es zeigen im Einzelnen:
- Figur 1:: Anhängerdeichsel mit Stützvorrichtung von der Seite;
- Figur 2:: Anhängerdeichsel mit Stützvorrichtung von oben;
- Figur 3:: Stützvorrichtung ohne Stützlast;
- Figur 4:: Stützvorrichtung mit Stützlast;
- Figur 5:: Stützvorrichtung mit vergrößert hervorgehobene An- zeigevorrichtung;
- Figur 6:: Stützvorrichtung mit Gewichtsanzeige an der Rad- schwinge im weitgehend entlasteten Zustand;
- Figur 7:: Stützvorrichtung aus Figur 6 im weitgehend belaste- ten Zustand;
- Figur 8:: Stützvorrichtung mit Detaildarstellung der Losdreh- sicherung im weitgehend entlasteten Zustand;
- Figur 9:: Stützvorrichtung mit Detaildarstellung der Losdreh- sicherung im weitgehend entlasteten Zustand;
- Figur 10:: Stützvorrichtung ohne Gewichtsanzeige.

In den Figuren 1 und 2 wird schematisch die Anordnung eines Anhängerchassis von einem Wohnwagen, einem Pferdeanhänger et cetera, von der Seite und von oben, gezeigt. Das Anhängerchassis besteht aus Anhängerkupplung 26, einer Deichsel 22, dem Anhängerrad 23 und einer Anhängerachse 24, mit der im Bereich der Deichsel 22 angebrachten Stützvorrichtung 1. Je nach Beladungssituation eines solchen, meist einachsigen, Anhängers ergeben sich an der Anhängerkupplung 26 unterschiedliche Stützlasten F. Im Betrieb ist es notwendig, diese Stützlast F in einem bestimmten Bereich, der meist durch das ziehende Fahrzeug definiert wird, einzustellen. Hierzu ist es vorteilhaft eine direkte Anzeigevorrichtung 12 an der Stützvorrichtung 1 zu haben.

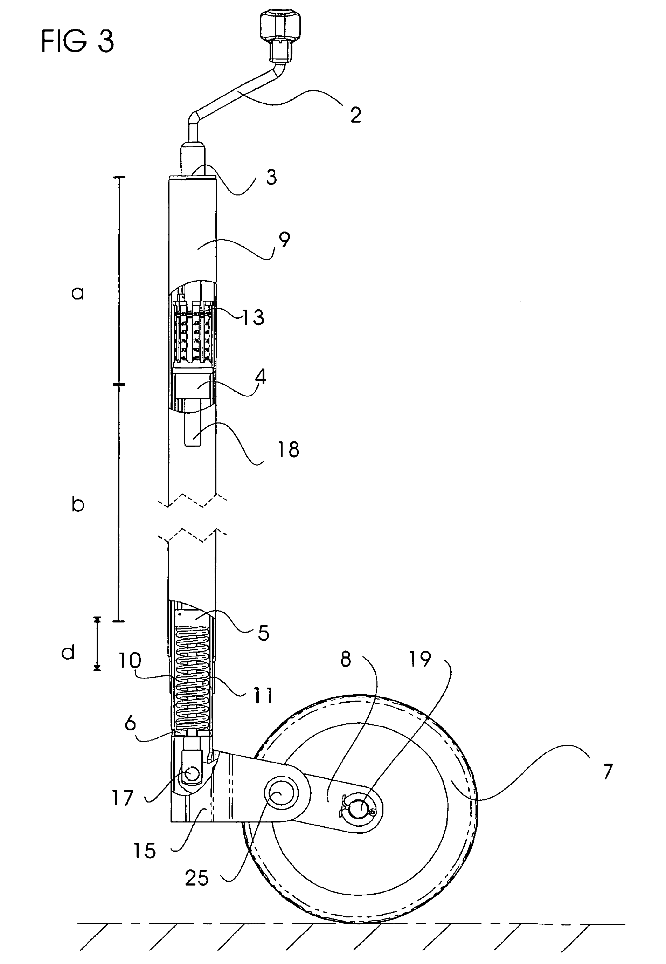

Figur 3 zeigt eine erfindungsgemäße Stützvorrichtung ohne Stützlast. Zu sehen ist das Außenrohr 9 mit einem ersten Stützlager 3 und das, im Außenrohr 9 bewegliche, Innenrohr 10 mit einem zweiten Stützlager 4 und einem dritten Stützlager 6. Hierbei sind das erste Stützlager 3 und das zweite Stützlager 4 über eine, bezüglich des Abstandes a zwischen den Stützlagern verstellbare, Spindelstange 18 verbunden. Das Federelement 11 wird zwischen dem dritten Stützlager 6 und dem vierten Stützlager 5 eingespannt. Das Stützrad 7, welches über einen Schwingarm 8 exzentrisch zum Innenrohr 10 gelagert ist, ist mit dem vierten Stützlager 5 verbunden und durch eine Spiralfeder 11 federnd gelagert. Das vierte Stützlager 5 ist wiederum durch einen Messstab 14 mit einer Anzeigevorrichtung 12, die den Federweg d des Federelementes 11 anzeigt, verbunden. An der Spindelstange 18, die sich am Außenrohr 9 abstützt, ist die Handkurbel 2 befestigt. Durch das Federelement 11 und das dritte Stützlager 6 verläuft der Stößel 16, der am unteren Ende über das Stößellager 17 mit dem Schwingarm 8, welcher durch den Schwenkarm 15 hindurchgeht, welcher über das Radlager 19 mit dem Stützrad 7, verbunden ist. Die Verbindungen zwischen Stößel 16 und Schwingarm 8 und zwischen Schwingarm 8 und Radlager 19 beziehungsweise Rad 7 sind beweglich ausgeführt und befinden sich, da keine Stützlast F vorhanden ist, in einer Ausgangsposition. Im Außenrohr 9 befindet sich der Ausschnitt 20 für die Anzeigevorrichtung 12 mit der Messskala 21, die sich hinter einem durchsichtigen Fenster befindet und welche sich durch eine Abdeckvorrichtung abdecken lässt.

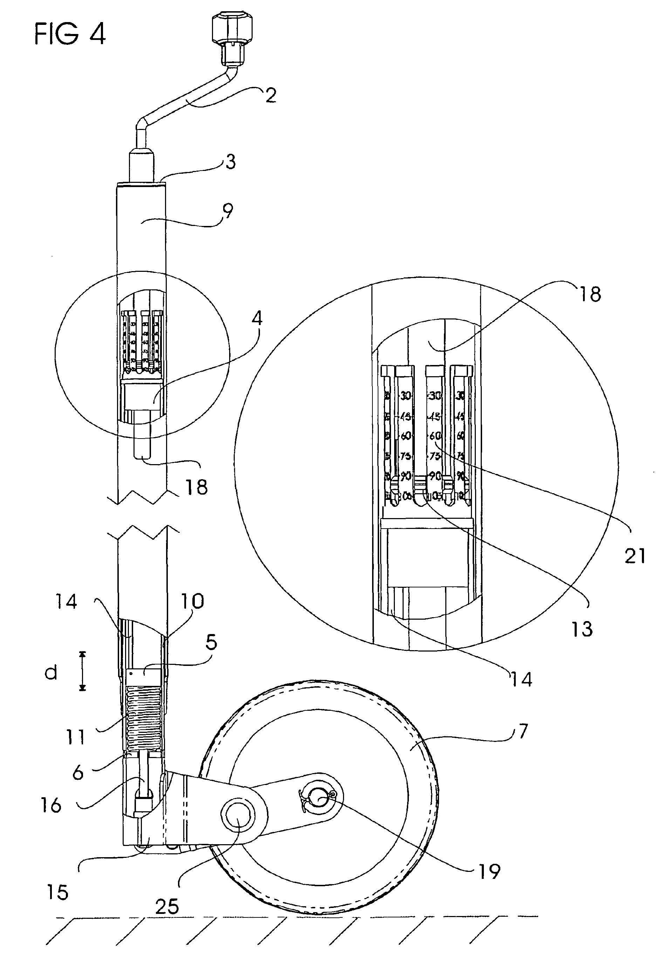

Eine Situation mit relativ hoher Stützlast ist in Figur 4 gezeigt. Das System Stützrad - Schwingarm - Stößel 7, 8, 16 befindet sich einer Lastposition, das heißt der Stößel 16 wurde aufgrund der Stützlast F, proportional zu dieser, durch das Federelement 11 hindurch nach unten geschoben. Hierdurch ist der mit dem Stößel 16 verbundene Messstab 14, um den Federweg d, welcher an der Anzeigevorrichtung 12 abgelesen werden kann, nach unten gezogen worden.

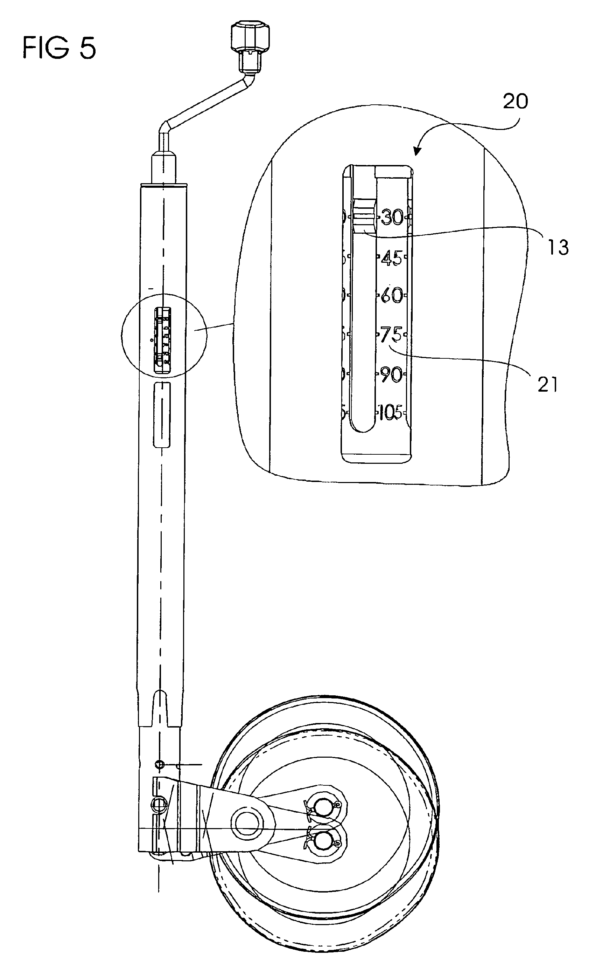

In der Figur 5 sieht man die Stützvorrichtung 1 mit einer vergrößerten Ansicht der Anzeigevorrichtung 12. Die Anzeigevorrichtung 12 besteht aus einem Ausschnitt 20 im Außenrohr 9, in dem sich die Messskala 21 hinter einem durchsichtigen Fenster befindet. Zusätzlich kann dieser von einer nicht dargestellten Abdeckvorrichtung geschützt werden. Ohne vorhandene Stützlast F zeigt die Markierung 13 auf der Messskala 21 das "Nullgewicht" an und die Verbindung zwischen Stützrad 7 und Stößel 16, bestehend aus Schwingarm 8, befindet sich in der Ausgangsposition. Wird eine Last auf den Anhänger geladen und es entsteht somit eine positive Stützlast F, so bewegt sich das System Stützrad - Schwingarm - Stößel 7, 8, 16 in die Lastposition. Auf der Messskala 21 kann nun die bestehende Stützlast F abgelesen werden. Die Anzeigevorrichtung 12 ist kalibrierbar ausgeführt, das heißt bei einer Erstbenutzung der Lastanzeige kann die Stützlast F an der Deichsel 22 mit einer Waage gemessen werden, so dass dann das entsprechende Gewicht an der Anzeigevorrichtung 12 entweder durch ein Verschieben der Markierung 13, Längsverstellen des Messstabes 14 oder Verschieben der Messskala 21 selbst eingestellt werden kann.

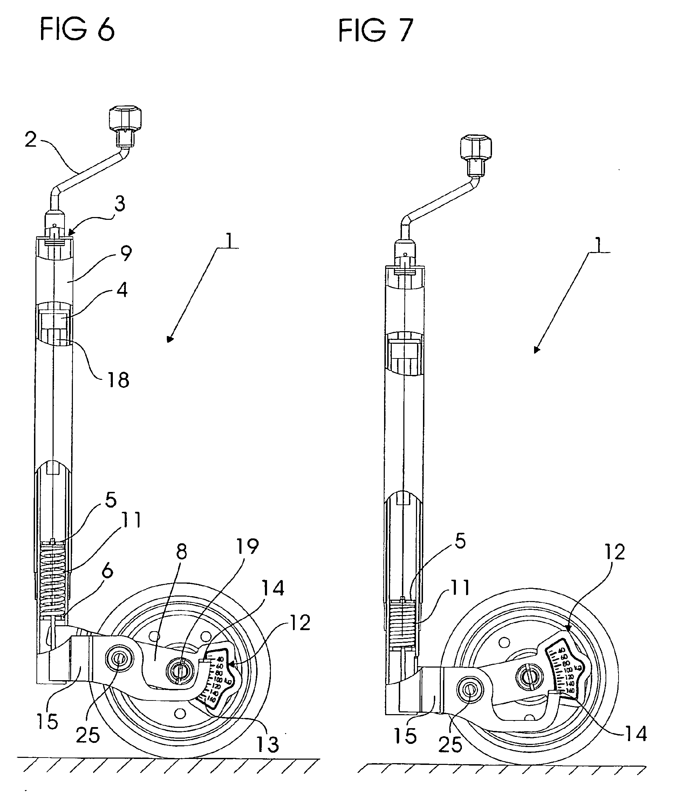

In den Figuren 6 und 7 ist einen weitere Variante einer Stützvorrichtung mit Gewichtsanzeige dargestellt, wobei die Figur 6 diese im weitgehend entlasteten und die Figur 7 diese Stützvorrichtung im weitgehend belasteten Zustand zeigt. Der grundsätzliche Aufbau dieser Variante entspricht den Figuren 3 und 4, allerdings ist die Gewichtsanzeige hier in den Bereich der Schwinge 8 verlagert worden. Die Gewichtsanzeige 12 besteht dabei aus einer mit der Schwinge 8 beweglichen Skala mit Markierungen 13, die sich gegenüber einer feststehenden Messzunge 14 entsprechend dem auftretenden Gewicht bewegt. Die Messzunge 14 ist dabei als eine Verlängerung des Schwenkarmes 15 ausgebildet.

Es wird darauf hingewiesen, dass die Anordnung von Messskala und Messzunge auch umkehrbar ist, so dass die Messskala am Schwenkarm angebracht wird und die Messzunge oder eine entsprechende Markierung an der Schwinge angebracht werden kann. Hierdurch ergibt sich allerdings eine schlechtere Ablesbarkeit gegenüber der ersten Variante, da die Messskala im Bereich der Schwenkarmlagerung weniger weit gespreizt werden kann. Allerdings kann diese Situation verbessert werden, wenn der Schwenkarm seitlich weit genug von der Schwenkarmlagerung weg - in den Figuren 6 und 7 nach rechts - erweitert wird, so dass auch kleine Winkelbewegungen des Schwingarms zu effektiven Anzeigewegen führt.

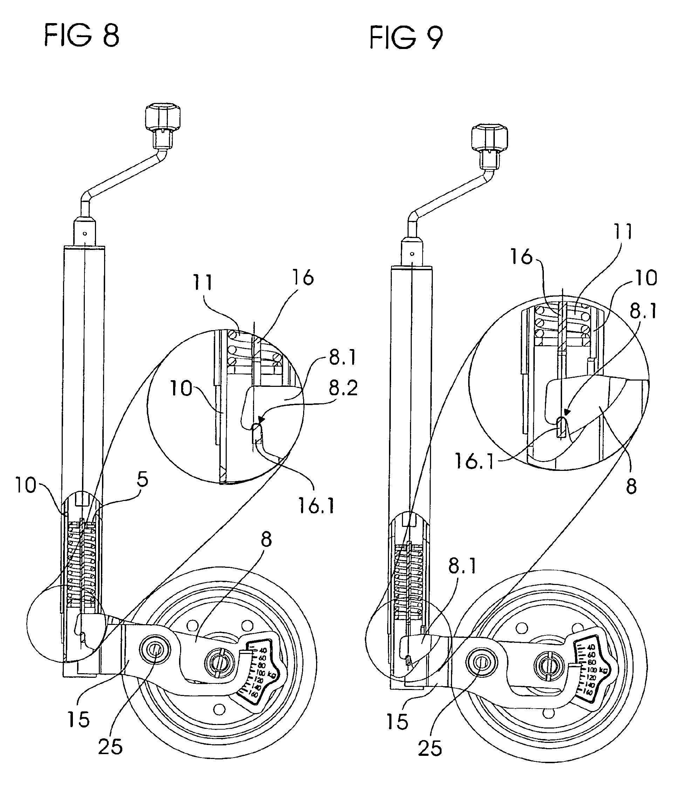

In den Figuren 8 und 9 wird die Funktionsweise der erfindungsgemäßen Losdrehsicherung dargestellt. Die Figur 8 die Stützvorrichtung mit einer Detaildarstellung der Losdrehsicherung im weitgehend entlasteten Zustand der Stützvorrichtung und der Schwinge 8 im ausgedrehten Zustand. In der Figur 9 ist die gleiche Stützvorrichtung gezeigt, wobei hier jedoch das Innenrohr 9 hochgedreht ist und dadurch der linke Arm 8.1 der Schwinge 8, an dem auch der Stößel 16 eingehängt ist, gegen das Außenrohr abgestützt und heruntergedrückt ist. Dadurch spannt sich die Feder 11 und überträgt diese Spannung über den unten angeordneten Zughaken 16.1 über die Einbuchtung 8.1 auf die Schwinge 8, so dass zwischen dem Außenrohr 9 und dem Innenrohr 10 eine Zugspannung wirkt, die ein unbeabsichtigtes verdrehen der Spindelstange 18 während der Fahrt verhindert.

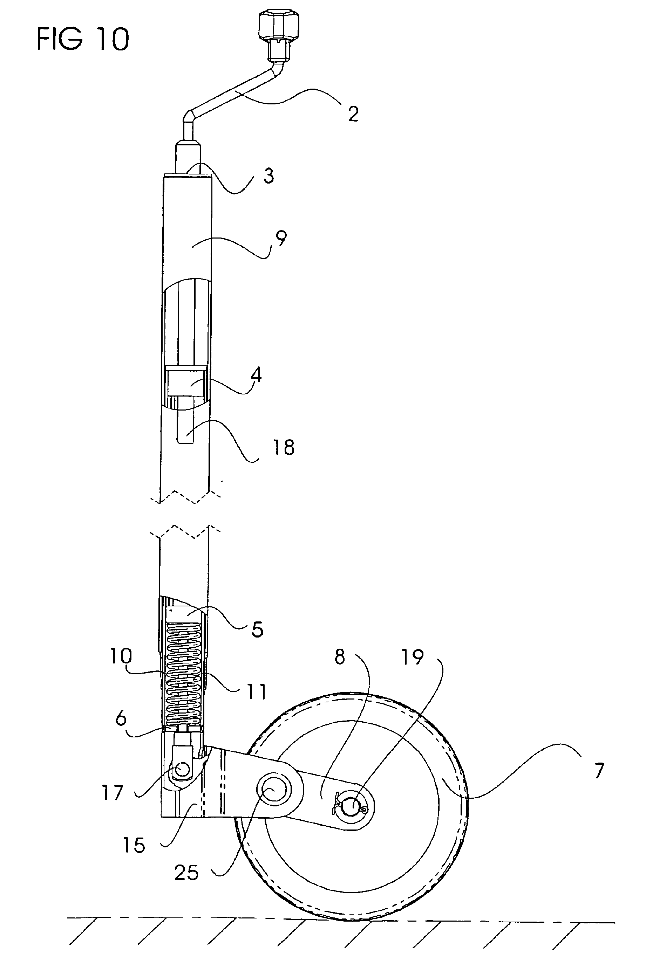

Obwohl in den vorhergehenden Figuren 3 bis 9 nur Ausführungen mit integrierter Gewichts- oder Lastanzeige dargestellt sind, liegt es jedoch auch eine Stützvorrichtung ohne Gewichtsanzeige im Rahmen der Erfindung. Eine solche Stützvorrichtung ist in der Figur 10 dargestellt. Diese entspricht im Aufbau der Ausführungsvariante von Figur 3, weist jedoch keine Gewichtsanzeige auf. Eine solche Variante zeichnet sich auch ohne die erfindungsgemäße Gewichtsanzeige durch einen besonders hohen Laufkomfort aus, da hier ebenso eine mechanische Entkopplung zwischen spindelbetriebenen der Höhenverstellung und der Federung über die Schwinge stattfindet.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Insgesamt wird mit der Erfindung vorgeschlagen eine schon bekannte Stützvorrichtung einer Anhängerdeichsel eines PKW-Anhängers zu verbessern, indem die Funktion der Höhenverstellung und die Federfunktion, gegebenenfalls mit Stützlastanzeige, mechanisch entkoppelt wird, indem ausschließlich zur Höheneinstellung ein Innenrohr in einem Außenrohr zur Höheneinstellung gegeneinander verschoben werden und zur Federung und Gewichtsanzeige eine Schwinge gegenüber dem relativ zum für die Höheneinstellung bewegten Rohr federnd gelagert wird. Hierdurch wird verhindert, dass es der Einfederung der Schwinge zu Verkantungen zwischen dem sich bewegenden Außenrohr und dem Innenrohr kommt.

### Liste der Bezugszeichen

- 1: Stützvorrichtung
- 2: Kurbel
- 3: erstes Stützlager
- 4: zweites Stützlager
- 5: viertes Stützlager
- 6: drittes Stützlager
- 7: Rad
- 8: Schwingarm
- 8.1: hinterer Arm der Schwinge 8
- 8.2: Einbuchtung am hinteren Arm der Schwinge
- 9: Außenrohr
- 10: Innenrohr
- 11: Feder
- 12: Anzeigevorrichtung
- 13: Markierung
- 14: Messstab / Messzunge
- 15: Schwenkarm
- 16: Stößel
- 16.1: Zughaken am Stößel 16
- 17: Stößellager
- 18: Spindelstange
- 19: Radlager
- 20: Ausschnitt
- 21: Messskala
- 22: Deichsel
- 23: Anhängerrad
- 24: Anhängerachse
- 25: Schwenkarmlager
- 26: Anhängerkupplung
- a: Abstand des ersten zum zweiten Stützlager
- b: Abstand des zweiten zum vierten Stützlager
- d: Federweg
- F: Stützlast

## Patentansprüche

1. Stützvorrichtung einer Anhängerdeichsel eines PKW-Anhängers, mindestens bestehend aus:
einem Außenrohr (9), das ein erstes Stützlager (3) aufweist,
einem, im Außenrohr (9) beweglichen, Innenrohr (10), das ein zweites Stützlager (4) und ein drittes Stützlager (6) aufweist,
einer Höheneinstellvorrichtung, die das erste Stützlager (3) mit einem zweiten Stützlager (4), bezüglich des Abstandes (a) zwischen den Stützlagern verstellbar, verbindet,
einem Federelement (11), welches sich einerseits am dritten Stützlager (6) und andererseits an einem vierten Stützlager (5) abstützt, und
einem Stützrad (7), welches mit dem vierten Stützlager (5) verbunden und durch das Federelement (11) federnd gelagert ist,
**dadurch gekennzeichnet, dass**
das Stützrad (7) über einen, starr am Innenrohr (10) befestigten Schwenkarm (15), am Schwingarm (8) exzentrisch und federnd zum Innenrohr (10) gelagert ist, wobei das Federelement (11) mit dem vierten Stützlager (5) innerhalb des Innenrohres (10) angeordnet ist.

2. Stützvorrichtung gemäß dem voranstehenden Anspruch 1, **dadurch gekennzeichnet, dass** das Innenrohr (10) ausschließlich durch die Höheneinstellvorrichtung gegenüber dem Außenrohr (9) beweglich ausgeführt ist.

3. Stützvorrichtung gemäß einem der vorangehenden Ansprüche 1 bis 2, **dadurch gekennzeichnet, dass** die Höhenverstelleinrichtung eine Spindelstange (18) aufweist.

4. Stützvorrichtung gemäß dem voranstehenden Anspruch 3, **dadurch gekennzeichnet, dass** die Spindelstange (18) mit einer Handkurbel (2) verbunden ist.

5. Stützvorrichtung gemäß einem der voranstehenden Ansprüche 1 bis 2, **dadurch gekennzeichnet, dass** die Höheneinstellvorrichtung einen Hydraulikzylinder aufweist.

6. Stützvorrichtung gemäß einem der voranstehenden Ansprüche 1 bis 5, **dadurch gekennzeichnet, dass** das erste Stützlager (3) oben mit dem Außenrohr (9) und das zweite Stützlager (4) oben mit dem Innenrohr (10) verbunden, vorzugsweise verschweißt oder verklemmt, ist.

7. Stützvorrichtung gemäß einem der voranstehenden Ansprüche 1 bis 6, **dadurch gekennzeichnet, dass** das vierte Stützlager (5) unten mit dem Innenrohr (10) verbunden ist und als Auflage für das Federelement (11) dient.

8. Stützvorrichtung gemäß einem der voranstehenden Ansprüche 1 bis 7, **dadurch gekennzeichnet, dass** der Schwenkarm (15), an dem der Schwingarm (8) für das Stützrad (7) gelagert ist, als Gabel ausgebildet ist.

9. Stützvorrichtung gemäß dem voranstehenden Anspruch 8, **dadurch gekennzeichnet, dass** der Schwingarm (8) über einen Stößel(16) mit dem vierten Stützlager (5) verbunden ist.

10. Stützvorrichtung gemäß dem voranstehenden Anspruch 9, **dadurch gekennzeichnet, dass** der Stößel (16) über ein Stößellager (17), bestehend aus einem Langloch im Schwingarm (8) und einem, durch dieses Langloch gesteckten Bolzen, beweglich am Schwingarm (8) gelagert ist.

11. Stützvorrichtung gemäß einem der voranstehenden Ansprüche 1 bis 10, **dadurch gekennzeichnet, dass** das Federelement (11) eine Spiralfeder ist.

12. Stützvorrichtung gemäß dem voranstehenden Anspruch 11, **dadurch gekennzeichnet, dass** der Stößel (16) durch die Spiralfeder (11) und das dritte Stützlager (6) hindurch geführt ist.

13. Stützvorrichtung gemäß einem der voranstehenden Ansprüche 1 bis 12, **dadurch gekennzeichnet, dass** eine Anzeigevorrichtung (12) vorgesehen ist, die den Federweg (d) des Federelementes (11) anzeigt.

14. Stützvorrichtung gemäß dem voranstehenden Anspruch 13, **dadurch gekennzeichnet, dass** das Außenrohr (9) einen Ausschnitt (20) zum Ablesen der Anzeigevorrichtung (12) aufweist.

15. Stützvorrichtung gemäß dem voranstehenden Anspruch 14, **dadurch gekennzeichnet, dass** der Ausschnitt (20) über ein durchsichtiges Fenster verfügt.

16. Stützvorrichtung gemäß einem der voranstehenden Ansprüche 13 bis 15, **dadurch gekennzeichnet, dass** eine Abdeckvorrichtung für die Anzeigevorrichtung (12), vorzugsweise eine Kunststoffmanschette, vorgesehen ist.

17. Stützvorrichtung gemäß einem der voranstehenden Ansprüche 13 bis 16, **dadurch gekennzeichnet, dass** die Anzeigevorrichtung (12) einen, mit dem vierten Stützlager (5) verbundenen, Messstab (14) aufweist.

18. Stützvorrichtung gemäß dem voranstehenden Anspruch 17, **dadurch gekennzeichnet, dass** der Messstab (14) zur Kalibrierung relativ zum vierten Stützlager (5) einstellbar ausgeführt ist.

19. Stützvorrichtung gemäß einem der voranstehenden Ansprüche 17 bis 18, **dadurch gekennzeichnet, dass** zur Kalibrierung eine Markierung (13) relativ zum Messstab (14) einstellbar angebracht ist.

20. Stützvorrichtung gemäß einem der voranstehenden Ansprüche 13 bis 19, **dadurch gekennzeichnet, dass** an der Anzeigevorrichtung (12) eine Messskala (21) angebracht ist.

21. Stützvorrichtung gemäß einem der voranstehenden Ansprüche 13 bis 20, **dadurch gekennzeichnet, dass** die Anzeigevorrichtung (12) entsprechend der Abstandsverhältnisse von Anhängerkupplung und Stützrad zur Achse kalibrierbar ausgeführt ist.

22. Stützvorrichtung gemäß dem voranstehenden Anspruch 21, **dadurch gekennzeichnet, dass** zur Kalibrierung die Messskala (21) verschiebbar ausgeführt ist.

23. Stützvorrichtung gemäß dem voranstehenden Anspruch 13, **dadurch gekennzeichnet, dass** die Anzeigevorrichtung (12) im Bereich des Schwingarms (8) angebracht ist.

24. Stützvorrichtung gemäß dem voranstehenden Anspruch 23, **dadurch gekennzeichnet, dass** die Anzeigevorrichtung (12) eine Messskala (21) aufweist, die am Schwingarm (8) angebracht ist, und einen feststehenden Zeiger, vorzugsweise eine Messzunge (14), die mit dem Schwenkarm (15) fest verbunden ist, aufweist.

25. Stützvorrichtung gemäß dem voranstehenden Anspruch 23, **dadurch gekennzeichnet, dass** die Anzeigevorrichtung (12) eine Messskala (21) aufweist, die mit dem Schwenkarm (15) fest verbunden ist, aufweist und am Schwingarm (8) ein damit fest verbundener Zeiger oder eine Markierung angebracht ist.

26. Stützvorrichtung gemäß einem der voranstehenden Ansprüche 24 und 25, **dadurch gekennzeichnet, dass** die Anzeigevorrichtung (12) eine Messskala (21) mit Skalierstrichen aufweist, die radial zum Drehpunkt der Messskala ausgerichtet sind.

27. Stützvorrichtung gemäß einem der voranstehenden Anspruch 24 und 26, **dadurch gekennzeichnet, dass** die Anzeigevorrichtung (12) eine Messskala (21) mit Skalierstrichen aufweist, die radial zu einem Mittelpunkt ausgerichtet sind, der außerhalb des Drehpunktes der Messskala liegt.

28. Stützvorrichtung gemäß einem der voranstehenden Anspruch 24 und 26, **dadurch gekennzeichnet, dass** die Anzeigevorrichtung (12) eine Messskala (21) mit Skalierstrichen aufweist, die parallel zueinander ausgerichtet sind.

29. Stützvorrichtung gemäß einem der voranstehenden Anspruch 24 und 26, **dadurch gekennzeichnet, dass** die Anzeigevorrichtung (12) eine Messskala (21) mit gekrümmten Skalierlinien aufweist, die bei einer Längsverschiebung des Zeigers eine Veränderung der Spreizung der Skalierung erlaubt.

30. Stützvorrichtung gemäß einem der voranstehenden Ansprüche 1 bis 29, **dadurch gekennzeichnet, dass** die Stützvorrichtung (1) derart ausgebildet ist, dass in der Transportstellung eine Vorspannung des Federelementes (11) auf der Spindel (18) liegt und eine Losdrehsicherung bewirkt.

## Claims

1. Support apparatus of a trailer tow bar of a passenger vehicle trailer, at least consisting of:
an outer tube (9) which has a first support bearing (3),
an inner tube (10) which is movable in the outer tube (9) and has a second support bearing (4) and a third support bearing (6),
a height-adjustment device which connects the first support bearing (3) to a second support bearing (4) in an adjustable manner with respect to the distance (a) between the support bearings,
a spring element (11) which is supported at one end on the third support bearing (6) and at the other end on a fourth support bearing (5), and
a support wheel (7) which is connected to the fourth support bearing (5) and is mounted in a resilient manner by means of the spring element (11),
**characterized in that**
the support wheel (7) is mounted eccentrically on the swinging arm (8) and in a resilient manner with respect to the inner tube (10) via a pivoting arm (15) fastened rigidly to the inner tube (10), the spring element (11) being arranged together with the fourth support bearing (5) within the inner tube (10).

2. Support apparatus according to the preceding Claim 1, **characterized in that** the inner tube (10) is designed to be movable in relation to the outer tube (9) exclusively by means of the height-adjustment device.

3. Support apparatus according to either of the preceding Claims 1 and 2, **characterized in that** the height-adjustment device has a spindle rod (18).

4. Support apparatus according to preceding Claim 3, **characterized in that** the spindle rod (18) is connected to a hand crank (2).

5. Support apparatus according to either of the preceding Claims 1 and 2, **characterized in that** the height-adjustment device has a hydraulic cylinder.

6. Support apparatus according to one of the preceding Claims 1 to 5, **characterized in that** the first support bearing (3) is connected, preferably welded or clamped, at the top to the outer tube (9) and the second support bearing (4) is connected, preferably welded or clamped, at the top to the inner tube (10).

7. Support apparatus according to one of the preceding Claims 1 to 6, **characterized in that** the fourth support bearing (5) is connected at the bottom to the inner tube (10) and serves as a support for the spring element (11).

8. Support apparatus according to one of the preceding Claims 1 to 7, **characterized in that** the pivoting arm (15) on which the swinging arm (8) for the support wheel (7) is mounted is designed as a fork.

9. Support apparatus according to the preceding Claim 8, **characterized in that** the swinging arm (8) is connected to the fourth support bearing (5) via a slide (16).

10. Support apparatus according to the preceding Claim 9, **characterized in that** the slide (16) is mounted movably on the swinging arm (8) via a slide bearing (17) consisting of an elongated hole in the swinging arm (8) and a pin inserted through said elongated hole.

11. Support apparatus according to one of the preceding Claims 1 to 10, **characterized in that** the spring element (11) is a spiral spring.

12. Support apparatus according to the preceding Claim 11, **characterized in that** the slide (16) is guided through the spiral spring (11) and the third support bearing (6).

13. Support apparatus according to one of the preceding Claims 1 to 12, **characterized in that** a display device (12) displaying the spring deflection (d) of the spring element (11) is provided.

14. Support apparatus according to the preceding Claim 13, **characterized in that** the outer tube (9) has a cutout (20) to enable reading of the display device (12).

15. Support apparatus according to the preceding Claim 14, **characterized in that** the cutout (20) has a transparent window.

16. Support apparatus according to one of the preceding Claims 13 to 15, **characterized in that** a cover device for the display device (12), preferably a plastic sleeve, is provided.

17. Support apparatus according to one of the preceding Claims 13 to 16, **characterized in that** the display device (12) has a measuring bar (14) connected to the fourth support bearing (5).

18. Support apparatus according to the preceding Claim 17, **characterized in that** the measuring bar (14) is designed to be adjustable relative to the fourth support bearing (5) for calibration purposes.

19. Support apparatus according to either of the preceding Claims 17 and 18, **characterized in that** a marking (13) is mounted adjustably relative to the measuring bar (14) for calibration purposes.

20. Support apparatus according to one of the preceding Claims 13 to 19, **characterized in that** a measuring scale (21) is mounted on the display device (12).

21. Support apparatus according to one of the preceding Claims 13 to 20, **characterized in that** the display device (12) is designed such that it can be calibrated in accordance with the distance ratios of the trailer coupling and support wheel to the axle.

22. Support apparatus according to the preceding Claim 21, **characterized in that** the measuring scale (21) is designed to be displaceable for calibration purposes.

23. Support apparatus according to the preceding Claim 13, **characterized in that** the display device (12) is mounted in the region of the swinging arm (8).

24. Support apparatus according to the preceding Claim 23, **characterized in that** the display apparatus (12) has a measuring scale (21) mounted on the swinging arm (8), and a fixed pointer, preferably a measuring tongue (14), which is connected fixedly to the pivoting arm (15).

25. Support apparatus according to the preceding Claim 23, **characterized in that** the display device (12) has a measuring scale (21) which is connected fixedly to the pivoting arm (15), and a pointer or a marking connected fixedly to said pivoting arm is mounted on the swinging arm (8).

26. Support apparatus according to either of the preceding Claims 24 and 25, **characterized in that** the display device (12) has a measuring scale (21) with scale points which are oriented radially with respect to the pivot point of the measuring scale.

27. Support apparatus according to either of the preceding Claims 24 and 26, **characterized in that** the display device (12) has a measuring scale (21) with scale points which are oriented radially with respect to a centre point located outside the pivot point of the measuring scale.

28. Support apparatus according to either of the preceding Claims 24 and 26, **characterized in that** the display device (12) has a measuring scale (21) with scale points which are oriented parallel to one another.

29. Support apparatus according to either of the preceding Claims 24 and 26, **characterized in that** the display device (12) has a measuring scale (21) with curved scale lines permitting the scale spread to be changed upon longitudinal displacement of the pointer.

30. Support apparatus according to one of the preceding Claims 1 to 29, **characterized in that** the support apparatus (1) is designed in such a manner that, in the transport position, the spring element (11) is prestressed on the spindle (18) and secures the latter against becoming loose.

## Revendications

1. Dispositif de support pour un timon de remorque pour une remorque de véhicule lourd, constitué au moins des éléments suivants :
un tube extérieur (9), qui présente un premier palier de support (3),
un tube intérieur (10) déplaçable dans le tube extérieur (9), qui présente un deuxième palier de support (4) et un troisième palier de support (6),
un dispositif d'ajustement en hauteur, qui relie le premier palier de support (3) au deuxième palier de support (4), de manière réglable par rapport à la distance (a) entre les paliers de support,
un élément de ressort (11), qui s'appuie d'une part sur le troisième palier de support (6) et
d'autre part sur un quatrième palier de support (5), et
une roue de support (7), qui est connectée au quatrième palier de support (5) et qui est supportée de manière élastique par l'élément de ressort (11),
**caractérisé en ce que**
la roue de support (7) est montée sur le bras oscillant (8) de manière excentrée et élastique par rapport au tube intérieur (10) par le biais d'un bras pivotant (15) fixé rigidement au tube intérieur (10), l'élément de ressort (11) étant disposé avec le quatrième palier de support (5) à l'intérieur du tube intérieur (10).

2. Dispositif de support selon la revendication précédente 1, **caractérisé en ce que** le tube intérieur (10) est réalisé de manière à pouvoir se déplacer exclusivement par rapport au tube extérieur (9) sous l'effet du dispositif d'ajustement en hauteur.

3. Dispositif de support selon l'une quelconque des revendications précédentes 1 et 2, **caractérisé en ce que** le dispositif d'ajustement en hauteur présente une tige de broche (18).

4. Dispositif de support selon la revendication précédente 3, **caractérisé en ce que** la tige de broche (18) est connectée à une manivelle (2).

5. Dispositif de support selon l'une quelconque des revendications précédentes 1 et 2, **caractérisé en ce que** le dispositif d'ajustement en hauteur présente un cylindre hydraulique.

6. Dispositif de support selon l'une quelconque des revendications précédentes 1 à 5, **caractérisé en ce que** le premier palier de support (3) est connecté en haut au tuyau extérieur (9) et le deuxième palier de support (4) est connecté en haut au tube intérieur (10), de préférence par soudage ou matage.

7. Dispositif de support selon l'une quelconque des revendications précédentes 1 à 6, **caractérisé en ce que** le quatrième palier de support (5) est connecté en bas au tube intérieur (10) et sert d'appui pour l'élément de ressort (11).

8. Dispositif de support selon l'une quelconque des revendications précédentes 1 à 7, **caractérisé en ce que** le bras pivotant (15), sur lequel est supporté le bras oscillant (8) pour la roue de support (7) est réalisé sous forme de fourche.

9. Dispositif de support selon la revendication précédente 8, **caractérisé en ce que** le bras oscillant (8) est connecté par le biais d'un poussoir (16) au quatrième palier de support (5).

10. Dispositif de support selon la revendication précédente 9, **caractérisé en ce que** le poussoir (16) est monté de manière déplaçable sur le bras oscillant (8) par le biais d'un palier de poussoir (17), constitué d'un trou oblong dans le bras oscillant (8) et d'un boulon enfiché à travers ce trou oblong.

11. Dispositif de support selon l'une quelconque des revendications précédentes 1 à 10, **caractérisé en ce que** l'élément de ressort (11) est un ressort spirale.

12. Dispositif de support selon la revendication précédente 11, **caractérisé en ce que** le poussoir (16) est guidé à travers le ressort spirale (11) et à travers le troisième palier de support (16).

13. Dispositif de support selon l'une quelconque des revendications précédentes 1 à 12, **caractérisé en ce qu'**un dispositif d'affichage (12) est prévu, lequel indique la course de ressort (d) de l'élément de ressort (11).

14. Dispositif de support selon la revendication précédente 13, **caractérisé en ce que** le tube extérieur (9) présente une portion (20) pour lire le dispositif d'affichage (12).

15. Dispositif de support selon la revendication précédente 14, **caractérisé en ce que** la portion (20) dispose d'une fenêtre transparente.

16. Dispositif de support selon l'une quelconque des revendications précédentes 13 à 15, **caractérisé en ce qu'**un dispositif de recouvrement est prévu pour le dispositif d'affichage (12), de préférence une manchette en plastique.

17. Dispositif de support selon l'une quelconque des revendications précédentes 13 à 16, **caractérisé en ce que** le dispositif d'affichage (12) présente une barre de mesure (14) connectée au quatrième palier de support (5).

18. Dispositif de support selon la revendication précédente 17, **caractérisé en ce que** la barre de mesure (14) est réalisée de manière à pouvoir être ajustée en vue du calibrage par rapport au quatrième palier de support (5).

19. Dispositif de support selon l'une quelconque des revendications précédentes 17 et 18, **caractérisé en ce que** pour le calibrage, un marquage (13) est appliqué de manière à pouvoir être ajusté par rapport à la barre de mesure (14).

20. Dispositif de support selon l'une quelconque des revendications précédentes 13 à 19, **caractérisé en ce qu'**une échelle de mesure (21) est appliquée sur le dispositif d'affichage (12).

21. Dispositif de support selon l'une quelconque des revendications précédentes 13 à 20, **caractérisé en ce que** le dispositif d'affichage (12) est réalisé de manière à pouvoir être calibré en fonction des rapports de distance de l'accouplement de remorque et de la roue de support par rapport à l'essieu.

22. Dispositif de support selon la revendication précédente 21, **caractérisé en ce que** l'échelle de mesure (21) est réalisée de manière déplaçable en vue du calibrage.

23. Dispositif de support selon la revendication précédente 13, **caractérisé en ce que** le dispositif d'affichage (12) est monté dans la région du bras oscillant (8).

24. Dispositif de support selon la revendication précédente 23, **caractérisé en ce que** le dispositif d'affichage (12) présente une échelle de mesure (21) qui est montée sur le bras oscillant (8) et un indicateur fixe, de préférence une languette de mesure (14), qui est connectée fixement au bras pivotant (15).

25. Dispositif de support selon la revendication précédente 23, **caractérisé en ce que** le dispositif d'affichage (12) présente une échelle de mesure (21) qui est connectée fixement au bras pivotant (15), et sur le bras pivotant (8) est monté un indicateur connecté fixement à celui-ci ou un marquage.

26. Dispositif de support selon l'une quelconque des revendications précédentes 24 et 25, **caractérisé en ce que** le dispositif d'affichage (12) présente une échelle de mesure (21) avec des traits de marquage, qui sont orientés radialement par rapport au centre de l'échelle de mesure.

27. Dispositif de support selon l'une quelconque des revendications précédentes 24 et 26, **caractérisé en ce que** le dispositif d'affichage (12) présente une échelle de mesure (21) avec des traits de marquage, qui sont orientés radialement par rapport à un point central qui est situé en dehors du centre de l'échelle de mesure.

28. Dispositif de support selon l'une quelconque des revendications précédentes 24 et 26, **caractérisé en ce que** le dispositif d'affichage (12) présente une échelle de mesure (21) avec des traits de marquage, qui sont orientés parallèlement les uns aux autres.

29. Dispositif de support selon l'une quelconque des revendications précédentes 24 et 26, **caractérisé en ce que** le dispositif d'affichage (12) présente une échelle de mesure (21) avec des lignes de marquage courbes, qui permettent une variation de l'écartement du système d'échelle dans le cas d'un déplacement longitudinal de l'indicateur.

30. Dispositif de support selon l'une quelconque des revendications précédentes 1 à 29, **caractérisé en ce que** le dispositif de support (1) est réalisé de telle sorte que, dans la position de transport, une précontrainte de l'élément de ressort (11) s'applique à la broche (18) et provoque une fixation empêchant un desserrage.
